# EUROPÄISCHE PATENTSCHRIFT

(11) **EP 2 951 133 B1**
(45) Veröffentlichungstag und Bekanntmachung des Hinweises auf die Patenterteilung: **03.11.2021**
(21) Anmeldenummer: 14702534.0
(22) Anmeldetag: 29.01.2014
(51) Int. Cl.: C04B 28/00, C04B 35/043, C04B 35/047, C04B 35/63, C04B 35/66, C04B 35/76, C04B 35/01

(54) **GEOPOLYMER-BINDEMITTELSYSTEM FÜR FEUERBETONE, TROCKENER FEUERBETONVERSATZ ENTHALTEND DAS BINDEMITTELSYSTEM SOWIE DIE VERWENDUNG DES VERSATZES**
GEOPOLYMER BINDING SYSTEM FOR REFRACTORY CASTABLES, DRY REFRACTORY CASTABLE BATCH AS WELL AS THE USE OF SAID BATCH
SYSTÈME LIANT GÉOPOLYMÈRE POUR BÉTON RÉFRACTAIRE, MÉLANGE BÉTON RÉFRACTAIRE SEC CONTENANT LEDIT SYSTÈME LIANT ET UTILISATION DUDIT MÉLANGE

(30) Priorität: 04.02.2013 DE 102013001927
(43) Veröffentlichungstag der Anmeldung: 09.12.2015
(73) Patentinhaber: Refratechnik Holding GmbH, 80807 München (DE)
(72) Erfinder: WERZ, Jennifer, 56244 Weidenhahn (DE); KESSELHEIM, Bertram, 53557 Bad Hönningen (DE); RUDERT, Darina, 55276 Oppenheim (DE); BEIMDIEK, Kai, 37213 Witzenhausen (DE)
(74) Vertreter: Dr. Solf & Zapf Patent- und Rechtsanwalts PartG mbB
(86) Internationale Anmeldenummer: PCT/EP2014/051733
(87) Internationale Veröffentlichungsnummer: WO 2014/118242

(56) Entgegenhaltungen:
- EP-A1- 0 940 376
- EP-A2- 0 119 812
- WO-A1-03/078349
- JP-A- H07 223 874
- KR-A- 20040 055 088
- KR-A- 20040 056 627
- US-A- 4 276 091
- US-A- 5 073 198
- G. Routschka, H. Wurthnow: "Praxishandbuch Feuerfeste Werkstoffe, 5. Auflage", 14. Oktober 2011 (2011-10-14), VULKAN VERLAG, XP002721904, Seiten 157-165, Tabelle 5.10, Seite 162, Produkte J,K, L; Seite 163

## Beschreibung

Die Erfindung betrifft einen trockenen Feuerbetonversatz für verflüssigte oder unverflüssigte Feuerbetone enthaltend ein mineralisches Geopolymer-Bindemittelsystem sowie die Verwendung des Versatzes.

Feuerbetone sind ungeformte feuerfeste Erzeugnisse. Gemäß der Norm DIN EN 1402-1, Kapitel 4.1.1 sind Feuerbetone Mischungen aus feuerfesten Zuschlagstoffen und Bindemittel(n). Sie werden als Versatz in der Regel trocken angeliefert und nach der Zugabe von Wasser oder einer anderen Flüssigkeit und entsprechender Mischung zu Frischfeuerbeton verarbeitet. Eingebaut werden sie durch Gießen mit Vibration, Gießen ohne Vibration (Selbstfließen), durch Stochern, Spritzen oder, falls erforderlich, durch Anstampfen. Die Bindung und Erhärtung erfolgt ohne Erwärmung. Ein verflüssigter Feuerbetonversatz soll gemäß Kapitel 4.1.3 einen Massenanteil von mindestens 2 % ultrafeiner Partikel (kleiner als ein Mikrometer) und mindestens ein Verflüssigungsmittel enthalten.

Man unterscheidet die Feuerbetone u. a. nach ihrem CaO-Gehalt und gruppiert sie dementsprechend in Medium-Cement Feuerbetone (MCC), Low-Cement Feuerbetone (LCC), Ultra-Low-Cement Feuerbetone (ULCC) und zementfreie Feuerbetone (NCC). Die Erfindung befasst sich mit zementfreien verflüssigten oder unverflüssigten Feuerbetonen. Es handelt sich dabei um feuerfeste monolithische Baustoffe. Zementfrei bedeutet nach DIN EN 1402-1, dass maximal 0,2 Gew.-% CaO aus z. B. Zementen stammend im Feuerbetonversatz enthalten sein dürfen.

Es gibt auf dem Markt bereits schnell trocknende und schnell aufheizbare, zementfreie, feuerfeste, lediglich mit Wasser zu verarbeitende Feuerbetonversätze. Die Eigenschaften der daraus hergestellten Feuerbetone werden z. B. beschrieben in
- Soudier, J., QD NCC: Quick drying no cement castables. A novel non-cementitious mineral bond permitting flexible installation and extreme rapid heating up. 53rd International Colloquium on refractories 2010, Eurogress Aachen, Germany, pp. 115-118.
- Malkmus, P., Soudier, J., Meunier, P., Bardin, V.: QD NCC: Quick drying no cement castables implementation of a novel bond system in castables for diverse applications. 53rd International Colloquium on refracstories 2010, Eurogress Aachen, Germany, pp. 119-121.
- Feuerfesttechnik, Erhöhte Anlagenverfügbarkeit und Energieeinsparung durch schnell trocknende, zementfreie Gießbetone, messedaily GIFA 2011, Düsseldorf, S. 14.
- INNOVATION & SOLUTIONS, Schnelle Trocknung siegt bei Daimler, Refractories, Calderys Mitarbeiter Zeitung, Dezember 2010, N.13, S.05.
- Calderys: Einfach Zeit gewinnen, messedaily GIFA 2011, Düsseldorf, S.3.
- INNOVATION & SOLUTIONS, A year of innovation, Refracstories, Calderys Mitarbeiter Zeitung, Juni 2010, N.12, S. 08-09.
- Soudier, J., QD NCC: Quick drying no cement castables. A novel non-cementitious mineral bond permitting extreme rapid dry out of monolithic refractory linings. UNITECR 2011, Kyoto, Japan, 1-D-17.
- Malkmus, P., Soudier, J., Meunier, P., Bardin, V.: QD NCC: Quick Dry No Cement Castables. Implementation and evaluation of performance of a novel bond system in castables for diverse applications. UNITECR 2011, Kyoto, Japan, 1-D-18.
- Oldin, J., Fowler, A., Soudier, J., Quick Dry No Cement Castables. Industrial feedback on implementation of a novel bond system in castables for foundry applications. UNITECR 2011, Kyoto, Japan, 1-D-19.
- Wagner, Dr. V., Louen, M.: Risk-Less Heating-up with Quick Dry Materials Presentation PetroCem, 7th Int., Cement Conference, 2012.

Die in diesem Stand der Technik beschriebenen feuerfesten Feuerbetone (Englisch "castables") sind verflüssigte Feuerbetone. Von den nur noch mit Wasser anzumachenden trockenen Versätzen (Mischungen) für diese Feuerbetone ist bekannt, dass es i.d.R. Produkte auf Basis Al₂O₃-SiO₂ sind, als Hauptrohstoffkomponente z. B. Andalusit, Bauxit, Schamotte, Mullit oder Korund und ein mineralisches schnell trocknendes und schnell aufheizbares Bindemittelsystem enthalten. Die Versätze sind i. d. R. innerhalb von 4 Monaten zu verarbeiten, weil andernfalls die vorgegebenen Eigenschaften des Bindemittelsystems aufgrund von zwischenzeitlichen, z. B. durch Luftfeuchtigkeit verursachten Hydratationsreaktionen nicht mehr gewährleistet werden können. Demgemäß wird eine garantierte Lagerungsdauer von lediglich 4 Monaten für in Big-Bags und 6 Monate für als Sackware angelieferte Feuerbetonversätze angegeben.

Aus der EP 839 775 B1 sind Versätze für verflüssigte Feuerbetone bekannt, die 30 - 80 Gew.-% einer feuerfesten Hauptkomponente mit Korngrößen über 74 µm (200 mesh), 1 - 30 Gew.-% feinteiliges feuerfestes Material mit Korngrößen < 74 µm (200 mesh) sowie ein zementfreies Bindemittelsystem aus einem sogenannten Binder in Form eines hydratisierbaren Aluminiumoxids (Al₂O₃) und einem sogenannten Aktivator in Form eines totgebrannten Magnesiumoxids (MgO) aufweisen. Diese Versätze haben insbesondere wegen der Neigung des MgO, mit z. B. Luftfeuchtigkeit zu Mg(OH)₂ (Brucit) zu reagieren, ebenfalls nur eine relativ geringe Lagerstabilität bzw. Lagerdauer bezüglich der ursprünglich eingestellten und gewünschten Frischbeton- und Festbetoneigenschaften.

Aus der WO 99/12860 A1 ist ein Versatz für einen verflüssigten Feuerbeton bekannt, der neben der grobkörnigen und feinteiligen Hauptkomponente einen Calciumaluminat-Zement und ein Additiv aus pulverförmigem amorphem Metakaolin als Binder und Mikrosilica als Aktivator aufweist. Das Additiv soll auf die Abbinde- und Erhärtungsreaktionen des Zements einwirken.

Aus der WO 2009/005205 A1 ist ein alkaliaktiviertes Bindemittelsystem u. a. aus Metakaolin als Binder und einer Alkaliverbindung als Aktivator bekannt, das für die Herstellung von Mauermörteln geeignet ist.

Aus der US 2012/0152153 A1 ist ein Bindemittelsystem aus u. a. Metakaolin als Binder und einer Alkaliaktivatorlösung dafür aus einem Metallhydroxid und einem Metallsilikat bekannt, das zur Herstellung von normalem Beton verwendet wird.

Aus der WO 03/078349 A1 geht ein Geopolymer-Bindemittel auf Basis von Flugasche hervor, bei dem der Aktivator 5 bis 15 Gew.-% Me₂O enthält, wobei Me Na oder K ist. Des Weiteren enthält das Bindemittel 1 bis 15 Gew.-% einer kalkhaltigen Verbindung, bei der es sich z. B. um Dolomitkalkstein handeln kann.

Die US 5,073,198 B1 offenbart ein Verfahren zur Herstellung eines Baumaterials auf Basis von Hüttensand, welcher eine hydraulische Bindung bewirkt.

In all den zementfreien Binder-Aktivator-Systemen bildet sich nach Zutritt von Wasser ein sogenanntes erhärtendes Geopolymer. Ein Geopolymer besteht aus Si- und Al-Atomen, die über Sauerstoffatome zu einem polymeren Netzwerk gebunden sind. Der Prozess der Geopolymerbildung verläuft über Lösungs-, Kondensations-, Poly-Kondensations- sowie Polymerisationsreaktionen. Es wird eine sehr dichte und dauerhafte Geopolymermatrix mit extrem hoher mechanischer Festigkeit gebildet.

Es ist bekannt, dass die Verarbeitungs- und Grüneigenschaften und auch die Festigkeiten nach dem Erhärtungsprozess eingestellt werden können durch z. B. die Feinheit des Binders und Aktivators, die Reaktivität des Binders, die Alkalikonzentration einer Aktivatorlösung (PH-Wert ≥ 9,5) und auch über die Wechselwirkung zwischen Binder und Aktivator.

Je nach Kombination kann aber ein zu stark verzögertes oder beschleunigtes Reaktionsverhalten zwischen Binder und Aktivator auftreten und zu geringe Grünfestigkeiten und Endfestigkeiten verursachen.

Normalerweise sollen bei einer Referenztemperatur von 20 + 5° C Einstellgrö-ßen bei der Herstellung von Frischfeuerbetonen wie folgt gewählt werden, wobei ein möglichst weitgehend reduzierter Wasserbedarf durch z. B. Zusatzmittel anzustreben ist:
- Umschlagpunkt im Mischer von trockener zu flüssiger bzw. verarbeitungsfähiger Konsistenz innerhalb von 120 Sekunden
- offene Verarbeitungszeiten der Frischfeuerbetone von ≥ 30 Minuten
- optimale Verarbeitungskonsistenz für eine hohe Verdichtung bzw. hohe Festigkeiten, d. h. nach der Nassmischzeit sollen innerhalb der angegebenen sortentypischen Anmachwasserspanne Fließwerte nach 1 Minute von ≥ 170 mm vorliegen (DIN EN 1402-4)

- sicheres Abbinden nach 1 Stunde bis 24 Stunden im Temperaturbereich von 0 - 40 °C
- schnelles Erhärten für hohe Grünfestigkeiten ≥ 1, insbesondere ≥ 5 MPa nach 24 Stunden Abbindezeit.

Im Vergleich zu Zement gebundenen Feuerbetonen ist eine z. B. 2- bis 5-fach höhere Gaspermeabilität für ein sicheres und beschleunigtes Austrocknen bei Temperaturerhöhung in situ eine weitere häufig geforderte Charakteristik der Geopolymermatrix. Diese Gaspermeabilität wird i.d.R. durch einen relativ hohen Kunststofffaseranteil von ≥ 0,05 Gew.-% und ggf. durch die Zugabe von Porosierungsmitteln gewährleistet. Die Kunststofffasern erzeugen durch Schmelzen bei Temperaturerhöhung Poren, die die Gaspermeabilität erhöhen.

Eine wesentliche Problematik bei den bekannten Versätzen für verflüssigte Feuerbetone ist - wie bereits oben erwähnt - die Alterungsempfindlichkeit der sehr feinteiligen und reaktiven Bindemittelsystemkomponenten, die zur Hydratisierung neigen. Aus der Hydratisierung resultiert insbesondere ein signifikanter Reaktivitätsverlust bzw. eine Veränderung der Reaktivität, insbesondere des Bindemittelsystems. In der Regel steigt damit der Wasserbedarf für optimale Verarbeitungseigenschaften und für ein gutes Fließverhalten und Verdichtungsvermögen. Einhergehend ergeben sich längere Erhärtungszeiten und geringere Grün- und Endfestigkeiten.

Aufgabe der Erfindung ist, einen trockenen Feuerbetonversatz mit einem Geopolymer-Bindemittelsystem zu schaffen, das eine verbesserte Lagerstabilität destrockenen Feuerbetonversatzes gewährleistet, ohne dass nach längerer Lagerdauer im Vergleich zum Stand der Technik die ursprünglich eingestellten Eigenschaften des Bindemittelsystems bei Zutritt von Anmachwasser und damit insbesondere die Verarbeitbarkeit, das Abbinden und Erhärten des voreingestellten Versatzes sich inakzeptabel verändern.

Diese Aufgabe wird gelöst durch einen Feuerbetonversatz mit einem bei Kontakt mit Anmachwasser reagierendem Bindemittelsystem, das aufweist
a) als mineralischen Binder mindestens ein reaktives, feinteiliges Aluminiumsilikat in Form von Metakaolin und/oder getempertem Ton und/oder Ziegelmehl, und/oder ein Erdalkalialuminiumsilikat in Form von Steinkohlenflugasche und/oder Hüttensand (Hochofenschlacke), und/oder ein Kalksandsteinmehl und/oder ein amorphes Silika, insbesondere in Form von Mikrosilika,
b) als mineralischen Aktivator die Kombination aus mindestens zwei feinteiligen, trockenen, mit Wasser eine alkalische Lösung bildenden Magnesiumkomponenten, wobei die Aktivatorkombination ausgewählt ist aus der folgenden Gruppe von Magnesiumkomponenten: MgO-Kauster, totgebranntes MgO in Form von Schmelz-und/oder Sintermagnesia, MgO-überschüssiger Spinell, Spinell, Brucit, Magnesiumsilikate wie Forsterit, Olivin, Dunit, Serpentinit, MgO-haltiges Additiv in Form von MgO-haltigem Natriumphosphat.

Vorzugsweise liegen die Magnesiumkomponenten vor in Form von durch Brennen von Magnesit oder Dolomit, oder durch Fällung aus Brucit, oder durch thermische Spaltung aus Magnesiumchlorid oder Magnesiumsulfat oder Magnesiumsulfid, oder durch Extraktion aus Dolomit erzeugtem MgO in Form von sogenanntem MgO-Kauster, und/oder in Form von durch Sintern oder Schmelzen erzeugtem MgO.

Magnesiumkomponenten (Mg-Komponenten) im Sinne der Erfindung sind somit mit Wasser alkalisch reagierende MgO-enthaltende mineralische Erzeugnisse wie oben unter b) angegeben. Es handelt sich also um MgO-Erzeugnisse, aber auch um Mg-enthaltende mineralische Rohstoffe und/oder Erzeugnisse wie Olivin, Forsterit, Dunit, Brucit, Spinell.

Im Folgenden werden die mineralischen Binder des Bindemittelsystems des erfindungsgemäßen Feuerbetonversatzes angegeben.

Bei den Aluminiumsilikaten handelt es sich erfindungsgemäß um feinteilige Metakaoline, feinteilige Tone, feinteilige Ziegelmehle, feinteilige Hochofenschlacken und feinteilige Flugaschen.

Metakaolin ist ein hoch reaktives Aluminiumsilikat-Puzzolan. Es wird erfindungsgemäß in sehr feinteiliger Form, z. B. mit Korngrößen zwischen 0 und 500 µm, insbesondere zwischen 1 und 120 µm, verwendet. Die Herstellung und die Eigenschaften von für die Zwecke der Erfindung geeigneten amorphen Metakaolinen werden z. B. in der WO 99/12860 A1 bzw. in der US-Patentanmeldung US 08 80062 A1 beschrieben.

Im Rahmen der Beschreibung der Erfindung meint die Angabe "Korngrößen zwischen 0 und x µm" eine Korngrößenverteilung, ermittelt durch z. B. fraktionierte Siebung mit Sieben üblicher genormter Maschenweite bis hin zur Maschenweite "x" und/oder durch Lasergranulometrie und/oder Sedimentation der Partikel in einer Flüssigkeit gemäß dem Stokes'schen Gesetz.

Metakaolin wird als Binder im geopolymeren Bindesystem in Mengen zwischen 40 und 99 Gew.-%, insbesondere zwischen 50 und 80 Gew.-%, bezogen auf die Menge des Bindemittelsystems verwendet. Der Rest ist jeweils mindestens ein Aktivator.

Hüttensand ist ein im Wesentlichen glasiges silikatisches Material. Verwendbar für die Zwecke der Erfindung sind Hüttensande mit folgender Zusammensetzung in Gew.-%:

| | |
|---|---|
| SiO₂ | 35 bis 40 |
| Al₂O₃ | 8 bis 14 |
| Fe₂O₃ | < 0,5 |
| MnO | < 1,5 |
| CaO | 33 bis 43 |
| MgO | 4 bis 12 |
| S | 1,0 bis 1,6 |

Die Korngrößen der Hüttensande liegen zweckmäßigerweise zwischen 0 und 20 µm, insbesondere zwischen 0 und 12. µm.

Steinkohlenflugasche ist ein feiner mineralischer Staub von hell- bis dunkelgrauer oder hellbrauner Farbe. Infolge der hohen Verbrennungstemperaturen besteht Steinkohlenflugasche überwiegend aus kugelförmigen, glasigen Partikeln. Steinkohlenflugasche besteht überwiegend aus Silicium-, Aluminium-und Eisenoxid. Daneben enthält sie verschiedene Spurenelemente. Steinkohlenflugasche kann zudem geringe Anteile an Restkoks aufweisen.

Für die Erfindung können Flugaschen mit folgender Zusammensetzung in Gew.-% verwendet werden:

| | |
|---|---|
| SiO₂ | 40 bis 55 |
| Al₂O₃ | 23 bis 35 |
| Fe₂O₃ | 4 bis 17 |
| TiO₂ | 0,5 bis 1,3 |
| CaO | 1 bis 8 |
| MgO | 0,8 bis 4,8 |

| | |
|---|---|
| K₂O | 1,5 bis 5,5 |
| Na₂O | 0,1 bis 3,5 |
| SO₃ | 0,1 bis 2,0 |

Die Korngrößen der Flugaschen liegen zweckmäßigerweise zwischen 0 und 500 µm, insbesondere zwischen 0 und 100 µm. Die Flugaschen werden in Mengen zwischen 40 und 99 Gew.-%, insbesondere zwischen 50 und 80 Gew.-%, bezogen auf die Menge des Bindemittelsystems verwendet. Der Rest ist jeweils mindestens ein Aktivator.

Weitere verwendbare Binder, insbesondere Erdalkalisilikate, sind die getemperten Tone, die als Hauptmineral nicht nur Kaolinit, sondern auch Smektit/Montmorillonit oder Illit aufweisen können. Für die Erfindung können getemperte Tone mit folgender Zusammensetzung in Gew.-% verwendet werden:

| | |
|---|---|
| SiO₂ | 50 bis 70 |
| Al₂O₃ | 15 bis 20 |
| Fe₂O₃ | 2 bis 5 |
| TiO₂ | 0,2 bis 1 |
| CaO | 0,7 bis 5 |
| MgO | 2 bis 4 |
| K₂O | 0,2 bis 1 |
| Na₂O | 2 bis 3 |

Die Korngrößen der getemperten Tone liegen zweckmäßigerweise zwischen 0 und 500 µm, insbesondere zwischen 1 und 120 µm. Die getemperten Tone werden in Mengen zwischen 40 und 99 Gew.-%, insbesondere zwischen 50 und 80 Gew.-%, bezogen auf die Menge des Bindemittelsystems verwendet. Der Rest ist jeweils mindestens ein Aktivator.

Amorphes Silica besteht im Wesentlichen aus sehr kleinen, hochreaktiven kugelförmigen Partikeln. Verwendbar für die Zwecke der Erfindung sind Microsilika-Sorten mit folgender Zusammensetzung:

| | | |
|---|---|---|
| SiO₂ | Gew.-% | 92 bis 99,9% |
| Al₂O₃ | Gew-% | 0,1 bis 0,8% |
| Fe₂O₃ | Gew-% | 0,1 bis 1,5% |
| P₂O₅ | Gew.-% | 0,1 bis 0,4% |
| CaO | Gew.-% | 0,1 bis 1,0% |
| MgO | Gew.-% | 0,1 bis 1,6% |
| K₂O | Gew.-% | 0, 1 bis 1,7% |
| Na₂O | Gew.-% | 0, 1 bis 0,7% |
| ZrO₂ | Gew.-% | 0, 1 bis 6,0% |
| GV | Gew.-% | 0,3 bis 4,0% |

Die Korngrößen der amorphen Silica liegen zweckmäßigerweise zwischen 0 und 100 µm, insbesondere zwischen 0 und 10 µm. Amorphes Silica wird in Mengen zwischen 40 und 99 Gew.-%, insbesondere zwischen 50 und 85 Gew.-%, bezogen auf die Menge des Bindemittelsystems verwendet. Der Rest ist jeweils mindestens ein Aktivator.

Kalksandsteinmehl ist aufgemahlener Kalksandstein aus der Baustoffproduktion. Verwendbar für die Zwecke der Erfindung sind Kalksandsteinmehle mit folgender Zusammensetzung in Gew.-%:

| | |
|---|---|
| SiO₂ | 90 bis 96 |
| CaO | 4 bis 8 |
| MgO | 0 bis 2 |

Die Korngrößen der Kalksandsteinmehle liegen zweckmäßigerweise zwischen 0 und 100 µm, insbesondere zwischen 0 und 70 µm. Die Kalksandsteinmehle werden in Mengen zwischen 40 und 99 Gew.-%, insbesondere zwischen 50 und 80 Gew.-%, bezogen auf die Menge des Bindemittelsystems verwendet. Der Rest ist jeweils mindestens ein Aktivator.

Ziegelmehl ist ein Recyclingprodukt mit hohem amorphen Anteil aus zerkleinerten Ziegelsteinen.

Verwendbar für die Zwecke der Erfindung sind Ziegelmehle mit folgender Zusammensetzung in Gew.-%:

| | |
|---|---|
| Al₂O₃ | 10 bis 45 |
| SiO₂ | 50 bis 85 |
| Fe₂O₃ | 1 bis 16 |
| CaO | 0,1 bis 12 |
| MgO | 0,1 bis 4 |
| K₂O | 0,1 bis 3 |
| Na₂O | 0,1 bis 4 |
| TiO₂ | 0,1 bis 2 |

Die Korngröße der Ziegelmehle liegt zweckmäßigerweise zwischen 0 und 100 µm, insbesondere zwischen 0 und 70 µm. Die Ziegelmehle werden in Mengen zwischen 40 und 99 Gew.-%, insbesondere zwischen 50 und 80 Gew.-% bezogen auf die Menge des Bindemittelsystems verwendet. Der Rest ist jeweils mindestens ein Aktivator.

Es liegt im Rahmen der Erfindung, Bindemittelsysteme zusammenzustellen, die mindestens zwei der genannten Binder aufweisen. Die jeweilige Menge des verwendeten Binders bzw. der mindestens zwei Binder richtet sich dabei nach den zu gewährleistenden Eigenschaften. Der Binder oder die mindestens zwei Binder-Zusammenstellungen wird bzw. werden z. B. in Mengen zwischen 40 und 99 Gew.-%, insbesondere zwischen 50 und 80 Gew.-% bezogen auf die Menge des Bindemittelsystems verwendet.

Im Folgenden werden die mineralischen Aktivatoren des erfindungsgemäßen Bindemittelsystems angegeben.

Als Aktivator sind mindestens zwei mit Wasser alkalisch reagierende Mg-Komponenten zu verwenden. MgO-enthaltende Mg-Komponenten sind erfindungsgemäß MgO-Kauster oder totgebranntes gesintertes oder geschmolzenes MgO. Diese MgO-Erzeugnisse sind auf dem Markt erhältlich. Es sind insbesondere aus Magnesit oder Brucit kalzinierte bzw. gebrannte Produkte. Des Weiteren können erfindungsgemäß als Mg-Komponente verwendet werden MgO-reicher Spinell, Magnesiumsilikate wie Olivin, Forsterit, Dunit, MgO-haltiges Additiv in Form von MgO-haltigem Natriumphosphat und/oder Brucit.

Es ist bekannt, dass unterschiedliche kalzinierte oder totgebrannte MgO-Erzeugnisse i. d. R. unterschiedlich schnell im Kontakt mit Feuchtigkeit zu Brucit (Mg(OH)₂) reagieren können und dass die Brucitbildung das Reaktionsvermögen des MgO gegenüber Wasser und der Binderkomponente des Bindemittelsystems negativ beeinflusst.

Vorab testen kann man die langzeitige Veränderung des Reaktionsvermögens der MgO-enthaltenden Mg-Komponente durch eine eigenständig bzw. selbst entwickelte standardisierte simulierende Messmethode z. B. in einem Klimaschrank bei einer bestimmten Temperatur und einer bestimmten Luftfeuchtigkeit und bestimmten Zeitabständen. Gemessen wird nach jeweils einer bestimmten Beaufschlagungsdauer die Wasseraufnahme und damit die Brucit-Bildung. Zweckmäßigerweise wird diese Messmethode wie folgt durchgeführt bzw. standardisiert:
Zu prüfende MgO-Materialproben werden vorgewogen und im Klimaschrank bei einer bestimmten Temperatur z. B. zwischen 30 bis 35° C und bei einer bestimmten rel. Luftfeuchte von z. B. 80 bis 85 %, z. B. 1 bis 168 Stunden gelagert. Nach vorbestimmten Lagerzeiten wird jeweils Probenmaterial entnommen und z. B. 1 Stunde im Trockenschrank bei einer Temperatur von z. B. 110° C getrocknet und erneut gewogen. Die durch die Hydratation entstandene Gewichtszunahme wird auf die Brucitmenge stöchiometrisch berechnet.

Nach Feststellung der zeitabhängigen Brucit-Bildung nach der eigenständig entwickelten, standardisierten Klimaschrankmethode kann man mit den Brucit in unterschiedlichen Mengen enthaltenden MgO-Materialproben aus der Klimaschrankprüfung empirisch die Reaktionsfähigkeit mit dem Binder feststellen und daraus auf die Lagerfähigkeit des Bindemittelsystems in Monaten schließen, wobei die Reaktionsfähigkeit z. B. mittels Umschlagpunkt beim Nassmischprozess, oder Ausbreitmaß, oder Abbindeverhalten nach dem Bechertest oder der Ultraschallmethode, oder Feststellung der Grünfestigkeit nach DIN EN 1402, Teil 6 kontrolliert werden kann.

Die Reaktionsfähigkeit des Bindemittelsystems wird vorzugsweise mit dem bekannten Ausbreitmaßverfahren geprüft werden. Diese Ausbreitmaßmethode wird im Rahmen der Erfindung durchgeführt gemäß DIN EN 1402-4, Ungeformte feuerfeste Erzeugnisse - Teil 4: Bestimmung der Konsistenz von Feuerbetonen; Deutsche Fassung EN 1402-4: 2003.

Mit der Kenntnis der Brucit-Bildung könnte man mit einem einzigen, getesteten MgO-Erzeugnis die mögliche Lagerdauer einstellen. Da aber die MgO-Erzeugnisse, die eine längere Lagerdauer des Bindemittelsystems gewährleisten, eine relativ schlechte Verarbeitbarkeit und schlechtes Abbinden und Erhärten verursachen, ist diese Maßnahme nicht zwingend zielführend.

Die Erfinder haben herausgefunden, dass durch die Kombination von mindestens zwei Mg-Komponenten, insbesondere mindestens zwei MgO-Erzeugnissen mit unterschiedlicher Reaktivität bezüglich Feuchtigkeit bzw. Brucitbildung bzw. Reaktion mit einem Binder in einem das erfindungsgemäße Bindemittelsystem enthaltenden erfindungsgemäßen Feuerbetonversatz gewährleistet werden kann, dass über eine längere Lagerdauer als bisher von z. B. über 6 Monate die Verarbeitbarkeit, das Fließ-, Abbinde- und Erhärtungsverhalten, das der Versatz, der das Bindemittelsystem enthält, anfänglich nach der Herstellung gewährleistet, nahezu unverändert bis zu einer vorher bestimmbaren maximalen Lagerdauer von z. B. ≥ 6 Monaten aufrechterhalten bleibt.

Verwendet wird erfindungsgemäß dabei als Aktivator die Kombination z. B. aus mindestens zwei MgO-Kauster mit zeitlich unterschiedlicher Feuchtigkeitsaufnahme und Brucitbildung, wobei der eine Kauster reaktiver ist und somit schneller reagiert und der andere Kauster weniger reaktiv ist und langsamer reagiert. Weitere Kombinationen weisen z. B. die Kombination aus mindestens einem reaktiveren MgO-Kauster und mindestens einem weniger reaktiven totgebrannten MgO oder z. B. die Kombination aus mindestens einem reaktiveren MgO-Kauster und mindestens einem weniger reaktiven MgO-Spinell oder die Kombination aus mindestens einem reaktiveren MgO-Kauster und mindestens einem weniger reaktiven Mg-enthaltenden Rohstoff oder Erzeugnis, z. B. Forsterit oder Olivin oder einem anderen Magnesiumsilikat wie Dunit oder Serpentinit auf.

Die Erfindung beinhaltet z. B. die folgenden Aktivatorkombinationen:

| | | |
|---|---|---|
| Reaktivere Komponente | | weniger reaktive Komponente |
| MgO-Kauster | + | MgO-Kauster + MgO-haltiges Natriumphosphat |
| MgO-Kauster | + | MgO-Kauster + Brucit |

| | | |
|---|---|---|
| MgO-Kauster | + | Brucit |
| Totgebrannte Magnesia | + | Spinell, insbesondere MgO-überschüssiger Spinell |
| Totgebrannte Magnesia | + | Mg-enthaltendes Mineral (Forsterit, Olivin, Dunit) |
| Totgebrannte Magnesia | + | Brucit |
| Spinell, insbesondere MgO-überschüssiger Spinell | + | MgO-haltiges Natriumphosphat |
| Spinell, insbesondere MgO-überschüssiger Spinell | + | Brucit |
| MgO-enthaltendes Mineral | + | MgO-haltiges Natriumphosphat |
| MgO-enthaltendes Mineral | + | Brucit |

Eine erfindungsgemäße Aktivatorkombination wird mit mindestens einem Binder des oben angegebenen Typs gemischt und z. B. der Umschlagpunkt, das Ausbreitmaß bzw. der Fließwert nach 1 Minute und 25 Minuten sowie das Abbindeverhalten und die Erhärtungseigenschaften in Abhängigkeit von der Lagerdauer gemessen. Zur Festlegung einer maximalen Lagerstabilität sind einige Testversuche anzustellen, die die jeweils verwendeten feuerfesten Zuschlagstoffe, Zusatzstoffe und Zusatzmittel des Feuerbetonversatzes einbeziehen.

Beispielsweise kann eine erfindungsgemäße Kombination von MgO-Erzeugnissen wie folgt ermittelt werden.

Verwendet wird ein reaktiverer MgO-Kauster mit einer mittleren Korngröße d₅₀ = 5 µm, einer hohen MgO-Reinheit > 98 Gew.-% und einer starken Brucit-Bildung bei 30°C und 80% relativer Luftfeuchtigkeit von > 5 Gew.-% nach 24 Stunden. Verwendet wird zudem ein weniger reaktiver MgO-Kauster mit einer mittleren Korngröße von d₅₀ = 50 µm, einer geringeren MgO-Reinheit von 96 Gew.-% und einer geringeren Reaktivität zur Brucit-Bildung bei 30°C und 80% Luftfeuchtigkeit von < 3% nach 24 Stunden.

Mit dem reaktiveren Kauster, dem weniger reaktiven Kauster und einem Gemisch der beiden Kauster im Verhältnis 1:1 wurden die folgenden Feuerbetonversätze hergestellt jeweils aus einem Grundversatz aus

| | |
|---|---|
| Zuschlagstoff: | 66,5 Gew.-% Schmelzkorund |
| Zusatzstoff: | 25 Gew.-% Tonerdemehl |
| Binder: | 4,5 Gew.-% Mikrosilika |
| | 2,5 Gew.-% Metakaolin |

und
a) 1,50 Gew.-% reaktiverer Kauster
b) 1,50 Gew.-% weniger reaktiver Kauster
c) 1,50 Gew.-% eines Gemisches aus beiden Kaustern im Gewichtsverhältnis 1:1

Diesen Versätzen wurden 5,5 Gew.-% Wasser zugesetzt und die Versätze gemischt und danach der Fließwert gemäß DIN EN 1402-4 nach einer Minute sowie die Kaltdruckfestigkeit von aus der Mischung hergestellten Normprüfkörpern nach 24-stündiger Lagerung bei 20°C ermittelt.

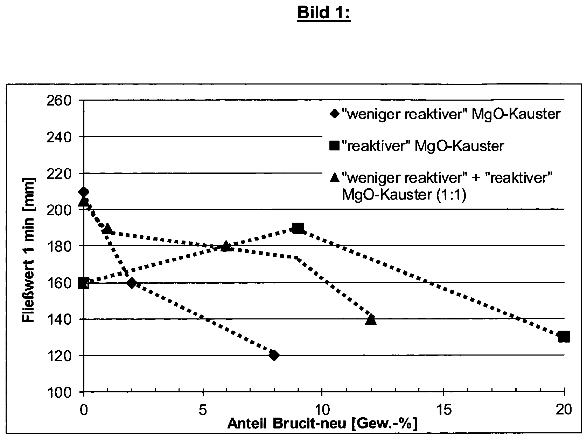

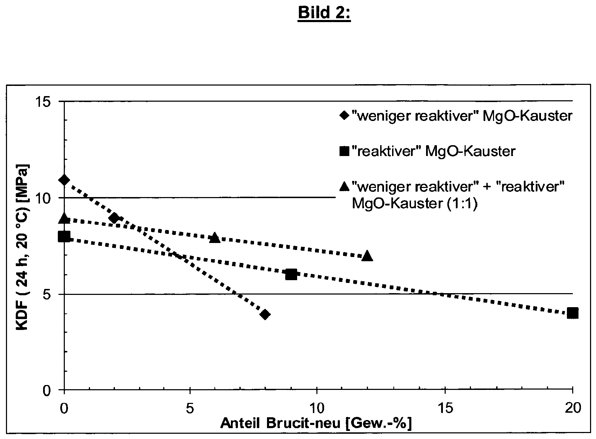

Das Ergebnis zeigt das Bild 1 für den Fließwert in Abhängigkeit von der Menge der Brucitbildung der Kauster bzw. der Kausterkombination und Bild 2 zeigt das Ergebnis für die Druckfestigkeit. Bild 1 zeigt die Veränderung der Fließwerte (1 min) in Abhängigkeit des neu gebildeten Brucitanteils bei Verwendung des weniger reaktiven Kausters, des reaktiven Kausters sowie einer Mischung aus beiden Aktivatoren. Bild 2 zeigt die Veränderung der Kaltdruckfestigkeit nach 24 h Erhärtungsdauer in Abhängigkeit des neu gebildeten Brucitanteils bei Verwendung des weniger reaktiven und des reaktiven Kausters sowie der Mischung aus beiden Aktivatoren.

Die Fließwerte charakterisieren die Verarbeitbarkeit der Mischungen, die über Monate möglichst über 170 mm erhalten bleiben sollen. Ebenso soll die Kaltdruckfestigkeit erhalten bleiben, die ein Indiz für die erzielten Endfestigkeiten ist.

Man erkennt aus Bild 1, dass durch die Kausterkombination akzeptierbare Fließwerte bis zu relativ hohen Brucit-Werten (9 Gew.-%) von Anfang an gewährleistet werden können.

Aus Bild 2 ist erkennbar, dass die Druckfestigkeit durch die Kausterkombination auf einem relativ hohen Niveau bei erhöhten Brucit-Werten erhalten bleibt.

Das Beispiel zeigt die Wirkung einer Kausterkombination mit einem bestimmten Binder. Gleiche Ergebnisse erhält man mit anderen Aktivatorkombinationen und anderen Bindern, was für den Fachmann pausibel ist.

Es hat sich herausgestellt, dass folgende Kombinationen von MgO-Komponenten besonders lange beständig gegen Eigenschaftsveränderungen sind:
Im Folgenden werden beispielhaft Zusammensetzungen für Feuerbetonversätze in Gew.-% bezogen auf den Gesamtversatz = 100 Gew.-% angegeben.
a) Bindemittelsystem 1,01 - 37,5, insbesondere 3,0 bis 22,5 mit folgenden Mischungsmengen Binder/Aktivator in Gew.-%: Binder: 1 - 15, insbesondere 2 - 15 Aktivator: 0,01 - 22,5, insbesondere 1,0 - 7,5
b) Mineralische Zuschlagstoffe 62,5 - 98,99, insbesondere 87,5 - 97,0 mindestens eines Zuschlagstoffs mit üblicher Kornverteilung von Mehlfraktion bis Grobkorn von z. B. bis 15 mm, z. B. ausgewählt aus der folgenden Gruppe:
- Leichtzuschlagstoffe wie Vermiculit, Perlit, Blähton
- saure/tonerdereiche Schamotte
- Andalusit / Silimanit
- Mullit
- Bauxit
- Calciumhexaaluminat
- Sinterkorund
- Schmelzkorund (BFA, 94-97 % Al₂O₃)
- Schmelzkorund (WFA, > 99 % Al₂O₃)
- zirkonoxidhaltige Rohstoffe (Zirkonia, AZS)
- Magnesia
- Forsterit (Olivin)
- Doloma
- Siliciumcarbid
- Zirkon (Zirkonsilikat)
- Quarzsand
- Spinell
- Graphit, Koks, Russ
- Chromerz, Chromoxid

c) Feinteilige mineralische Zusatzstoffe

| | |
|---|---|
| - Bindeton | 0 - 15, insbesondere 1 - 10 |
| - Tonerde-Mehl | 0 - 30, insbesondere 5 - 20 |
| - Tonerdezement (15 - 32% CaO) | 0 - 0,6, insbes. 0,1 - 0,3 |
| - Tonerdeschmelzzement (32 - 39% CaO) | 0 - 0,5, insbes. 0,1 - 0,25 |
| - Portlandzement (60 - 72% CaO) | 0 - 0,25, insbes. 0,1 - 0,15 |

d) Zusatzmittel

| | |
|---|---|
| - Additive wie Verflüssiger, | |
| Abbinderegulierer | 0 - 0,5, insbes. 0,1 - 0,15 |
| - Aluminiumhydroxid | 0 - 0,5 |
| - Porenbildner | 0 - 0,5 |
| - Edelstahlfasern | 0 - 3,0 |
| - Kunststofffasern | 0 - 0,3, insbes. 0,1 - 0,15 |

Die Erfindung wird insbesondere durch die folgenden Merkmale charakterisiert:
Die Erfindung beinhaltet ein alkalisch aktiviertes Bindemittelsystem für Feuerbetone aus mindestens einem mineralischen Binder und einem mineralischen Aktivator, die im Gemisch mit Wasser ein erhärtendes Geopolymer bilden, wobei als Aktivator eine Kombination aus mindestens zwei mit Wasser alkalisch reagierenden und dabei mit dem Binder zeitlich unterschiedlich reaktiv ein Geopolymer bildenden Magnesiumkomponenten (Mg-Komponenten) enthalten ist, wobei die Mg-Komponenten eine unterschiedliche Reaktivität bezüglich Luftfeuchtigkeit besitzen, indem die eine Mg-Komponente in einer bestimmten Zeit bei einer bestimmten relativen Luftfeuchtigkeit mehr Feuchtigkeit bzw. Wasser bindet als die andere Mg-Komponente und/oder eine unterschiedliche, sich zeitlich verändernde Reaktivität bezüglich des Binders aufweisen.

Vorteilhaft ist, wenn der Aktivator mindestens ein MgO-Erzeugnis als Mg-Komponente enthält.

Weiterhin vorteilhaft ist, wenn der Aktivator mindestens ein MgO-Erzeugnis und mindestens eine mit Wasser alkalisch reagierende, kein MgO-Erzeugnis aufweisende Mg-Komponente aufweist bzw. aus den beiden Mg-Komponenten besteht.

Zweckmäßig ist, wenn der Aktivator nur MgO-Erzeugnisse als Mg-Komponenten aufweist bzw. nur aus MgO-Erzeugnissen besteht.

Besonders vorteilhaft ist, wenn der Aktivator mindestens zwei MgO-Kauster als Mg-Komponenten aufweist, insbesondere aus zwei MgO-Kaustern besteht.

Die Aktivatorkombinationen sind erfindungsgemäß ausgewählt aus der folgenden Gruppe von Mg-Komponenten:
MgO-Kauster, totgebranntes MgO in Form von Schmelz- und/oder Sintermagnesia, MgO-überschüssiger Spinell, Spinell, Brucit, Magnesiumsilikate wie Forsterit, Olivin, Dunit, Serpentinit, MgO-haltiges Additiv in Form von MgO-haltigem Natriumphosphat.

Das Bindemittelsystem enthält als Binder mindestens ein feinteiliges, mit dem Aktivator reaktives, vorzugsweise amorphes, Aluminiumsilikat aus der Gruppe Metakaolin, getemperter Ton, Ziegelmehl, Steinkohlenflugasche, Hüttensand. Des Weiteren sind als Binder erfindungsgemäß verwendbar Kalksandsteinmehl und amorphes Silika.

In einem erfindungsgemäßen Feuerbetonversatz wirkt ein erfindungsgemäßes Bindemittelsystem ohne weiteres, wenn der Feuerbetonversatz zumindest mindestens einen Zuschlagstoff aus einem oder mehreren feuerfesten Werkstoffen mit üblicher Kornverteilung für Feuerbetonversätze aufweist. Das Bindemittelsystem sollte vorzugsweise in folgenden Mengen in Gew.-% enthalten sein:
1 - 15, insbesondere 2 - 15 Binder, 0,01 - 22,5, insbesondere 1,0 - 7,5 Aktivator.

Vorteilhaft ist, die in der Beschreibung aufgezählten Zuschlagstoffe auszuwählen und davon mindestens einen zu verwenden, und zwar vorzugsweise in Mengen zwischen 62,5 und 98,99, insbesondere zwischen 87,5 und 97,0 Gew.-%. Die erfindungsgemäßen Feuerbetonversätze können zudem mindestens einen Zusatzstoff und mindestens ein Zusatzmittel aufweisen, jeweils ausgewählt aus den in der Beschreibung angegebenen Gruppen, vorzugsweise in den in der Beschreibung angegebenen Mengen.

Die erfindungsgemäßen Feuerbetonversätze werden vorzugsweise in den Anlagebereichen der Stahlindustrie z. B. Stahlpfanne, Tundish, Stahlpfannenrand, Lochsteine, Gasspülkegel, E-Ofendeckel, sowie in Ofenaggregaten zur Roheisenerzeugung z. B. Hochofenschacht, Hauptrinne, Eisenrinne, Schlackenrinne, Kipprinne und Roheisenbehandlung z. B. Roheisenpfannen, Roheisenmischer ebenso zum Roheisentransport, z. B. insbesondere für die Zustellung von Torpedotransportgefäßen, insbesondere Torpedoausgussschnauzen, des Weiteren zur Pflegespritzung vorverschlissener Bereiche eines Torpedotransportgefäßes eingesetzt. Darüber hinaus finden die Feuerbetonversätze Anwendung in Ofenaggregaten der Aluminiumindustrie z. B. in Aluminiumschmelzöfen, Aluminiumbehandlungsöfen oder Warmhalteöfen, im Badbereich sowie in den Seitenwänden des Oberofens, der Deckenzustellung, im Rampenbereich, im Einfüllschacht und im Bereich der Schmelzbrücken. In Müllverbrennungsanlagen z. B. im Einfüllbereich, in Seitenwänden und Decken, in Kraftwerken, vorwiegend im Bereich der Heizkessel und Rauchgasrücksaugschächten, sowie in Gießereien z. B. zur monolithischen Pfannenzustellung, zur Zustellung von Gießschnauzen und Rinnensystemen sind die erfindungsgemäßen Feuerbetone wegen ihrer überlegenen Eigenschaften besonders vorteilhaft verwendbar.

Die erfindungsgemäßen Feuerbetonversätze werden vorzugsweise auch in Anlagenbereichen der Klinkererzeugung der Zementindustrie verwendet, insbesondere in Zonen vor einem, in einem oder nach einem Zementofen, in denen z. B. ein erstes Austrocknen der monolithischen Zustellung durch den ersten heißen Klinker erfolgt. Die Zonen erstrecken sich z. B. vom Nose Ring, Umlaufring bis zu den Verschleißbänken im Kühler.

## Patentansprüche

1. Trockener, zementfreier Feuerbetonversatz zumindest enthaltend mindestens einen Zuschlagstoff aus feuerfestem Werkstoff und mindestens ein alkalisch aktiviertes Bindemittelsystem aus mindestens einem mineralischen Binder und einem mineralischen Aktivator, die im Gemisch mit Wasser ein erhärtendes Geopolymer bilden,
**dadurch gekennzeichnet, dass**
als Aktivator eine Kombination aus mindestens zwei mit Wasser alkalisch reagierenden und dabei mit dem Binder ein Geopolymer bildenden Magnesiumkomponenten enthalten ist, wobei die Magnesiumkomponenten eine unterschiedliche Reaktivität bezüglich Luftfeuchtigkeit und bezüglich des Binders aufweisen,
wobei das Bindemittelsystem als Binder mindestens ein feinteiliges, mit der Aktivatorkombination reaktives Aluminiumsilikat aus der Gruppe Metakaolin, getemperter Ton, Ziegelmehl und/oder ein Erdalkalialuminiumsilikat aus der Gruppe Steinkohlenflugasche, Hüttensand und/oder Kalksandsteinmehl und/oder amorphes Silika aufweist,
wobei die Aktivatorkombination ausgewählt ist aus der folgenden Gruppe von Magnesiumkomponenten: MgO-Kauster, totgebranntes MgO in Form von Schmelz- und/oder Sintermagnesia, MgO-überschüssiger Spinell, Spinell, Brucit, Magnesiumsilikate wie Forsterit, Olivin, Dunit, Serpentinit, MgO-haltiges Additiv in Form von MgO-haltigem Natriumphosphat.

2. Feuerbetonversatz nach Anspruch 1,
**dadurch gekennzeichnet, dass**
der Aktivator mindestens ein MgO-Erzeugnis in Form von MgO-Kauster, Schmelz- oder Sintermagnesia als Magnesiumkomponente enthält.

3. Feuerbetonversatz nach Anspruch 2,
**dadurch gekennzeichnet, dass**
der Aktivator mindestens ein MgO-Erzeugnis in Form von MgO-Kauster, Schmelz- oder Sintermagnesia als Magnesiumkomponente und mindestens eine mit Wasser alkalisch reagierende, kein MgO aufweisende Magnesiumkomponente aufweist bzw. aus den beiden Magnesiumkomponenten besteht.

4. Feuerbetonversatz nach Anspruch 2,
**dadurch gekennzeichnet, dass**
der Aktivator nur MgO-Erzeugnisse als Magnesiumkomponenten aufweist bzw. nur aus MgO-Erzeugnissen besteht.

5. Feuerbetonversatz nach einem oder mehreren der Ansprüche 2 bis 4,
**dadurch gekennzeichnet, dass**
der Aktivator mindestens zwei MgO-Kauster als Magnesiumkomponenten aufweist, insbesondere aus zwei MgO-Kaustern besteht.

6. Feuerbetonversatz nach einem oder mehreren der vorhergehenden Ansprüche,
**dadurch gekennzeichnet, dass**
das Bindemittelsystem 40 bis 99 Gew.-%, bevorzugt 50 bis 80 Gew.-%, Binder enthält.

7. Feuerbetonversatz nach einem der vorhergehenden Ansprüche, enthaltend Binder und Aktivator in folgenden Mengen in Gew.-%:
1 - 15, insbesondere 2 - 15 Binder
0,01 - 22,5, insbesondere 1,0 - 7,5 Aktivator.

8. Feuerbetonversatz nach einem der vorhergehenden Ansprüche, enthaltend mindestens einen Zuschlagstoff ausgewählt aus der folgenden Gruppe:
- Leichtzuschlagstoffe wie Vermiculit, Perlit, Blähton
- saure/tonerdereiche Schamotte
- Andalusit / Silimanit
- Mullit
- Bauxit
- Calciumhexaaluminat
- Sinterkorund
- Schmelzkorund (BFA, 94-97 % Al₂O₃)
- Schmelzkorund (WFA, > 99 % Al₂O₃)
- zirkonoxidhaltige Rohstoffe (Zirkonia, AZS)
- Magnesia
- Forsterit (Olivin)
- Doloma
- Siliciumcarbid
- Zirkon (Zirkonsilikat)
- Quarzsand
- Spinell
- Graphit, Koks, Russ
- Chromerz, Chromoxid,
insbesondere in Mengen zwischen 62,5 und 98,99, insbesondere zwischen 87,5 und 97,0 Gew.-%.

9. Feuerbetonversatz nach einem der vorhergehenden Ansprüche, enthaltend mindestens einen feinteiligen mineralischen Zusatzstoff, bevorzugt ausgewählt aus der folgenden Gruppe, besonders bevorzugt in den angegebenen Mengen in Gew.-%:
| | |
|---|---|
| - Bindeton | bis 15, insbesondere 1 - 10 |
| - Tonerde-Mehl | bis 30, insbesondere 5 - 20 |
| - Tonerdezement (15 - 32% CaO) | bis 0,6, insbes. 0,1 - 0,3 |
| - Tonerdeschmelzzement (32 - 39% CaO) | bis 0,5, insbes. 0,1 - 0,25 |
| - Portlandzement (60 - 72% CaO) | bis 0,25, insbes. 0,1 - 0,15 |

10. Feuerbetonversatz nach einem oder mehreren der vorhergehenden Ansprüche, enthaltend mindestens ein Zusatzmittel, bevorzugt ausgewählt aus der folgenden Gruppe, besonders bevorzugt in den angegebenen Mengen in Gew.-%:
| | |
|---|---|
| - Additive wie Verflüssiger, | bis 0,5, insbesondere 0,1 - 0,15 |
| Abbinderegulierer | |
| - Aluminiumhydroxid | bis 0,5 |
| - Porenbildner | bis 0,5 |
| - Edelstahlfasern | bis 3,0 |
| - Kunststofffasern | bis 0,3, insbesondere 0,1 - 0,15 |

11. Verwendung eines Feuerbetonversatzes nach einem oder mehreren der vorhergehenden Ansprüche in Anlagen der Stahlindustrie, in Ofenaggregaten der Roheisenerzeugung und Roheisenbehandlung und in Roheisentransportaggregaten sowie als Pflegespritzung verschlissener Bereiche in diesen Anlagen oder Aggregaten.

12. Verwendung eines Feuerbetonversatzes nach einem oder mehreren der Ansprüche 1 bis 10 in Ofenaggregaten der Aluminiumindustrie.

13. Verwendung eines Feuerbetonversatzes nach einem oder mehreren der Ansprüche 1 bis 10 in Anlagenbereichen der Klinkererzeugung der Zementindustrie.

## Claims

1. Dry, cement-free refractory concrete mix at least containing at least one aggregate composed of refractory material and at least one alkaline-activated binder system composed of at least one mineral binder and a mineral activator, which form a curing geopolymer in a mixture with water, **characterized in that**
a combination of at least two magnesium components that react with water in alkaline manner and thereby reactively form a geopolymer with the binder is contained as an activator, wherein the magnesium components comprise a different reactivity with regard to humidity in the air and with regard to the binder,
wherein the binder system has, as a binder, at least one fine-particle aluminum silicate that is reactive with the activator combination, from the group of metakaolin, tempered clay, brick dust and/or an alkaline earth aluminum silicate from the following group of anthracite flue ash, granulated slag and/or lime/sandstone powder and/or amorphous silica, wherein the activator combination is selected from the following group of magnesium components: caustic MgO, dead-burnt MgO in the form of fused and/or sintered magnesia, MgO-excess spinel, spinel, brucite, magnesium silicates such as forsterite, olivine, dunite, serpentinite, additiv containing MgO in form of sodium phosphate that contains MgO.

2. Refractory concrete mix according to claim 1,
**characterized in that**
the activator contains at least one MgO product in form of caustic MgO, fused or sintered magnesia as the magnesium component.

3. Refractory concrete mix according to claim 2,
**characterized in that**
the activator contains at least one MgO product in form of caustic MgO, fused or sintered magnesia as the magnesium component and at least one magnesium component that reacts with water in alkaline manner and does not have any MgO, or consists of the two magnesium components.

4. Refractory concrete mix according to claim 2,
**characterized in that**
the activator contains only MgO products as magnesium components or consists only of MgO products.

5. Refractory concrete mix according to one or more of claims 2 to 4, **characterized in that**
the activator has at least two caustic MgO compounds as magnesium components, particularly consists of two caustic MgO compounds.

6. Refractory concrete mix according to one or more of the preceding claims,
**characterized in that**
the binder system contains 40 to 99 wt.-%, preferably 50 to 80 wt.-%, binder.

7. Refractory concrete mix according to one of the preceding claims, containing binder and activator in the following amounts in wt.-%:
1 - 15, particularly 2 - 15 binder,
0.01 - 22.5, particularly 1.0 - 7.5 activator.

8. Refractory concrete mix according to one of the preceding claims, containing at least one aggregate selected from the following group:
- lightweight aggregates such as vermiculite, pearlite, expanded clay,
- acidic/alumina-rich chamotte,
- andalusite / sillimanite,
- mullite,
- bauxite,
- calcium hexa-aluminate,
- sintered corundum,
- fused corundum (BFA, 94-97% Al₂O₃),
- fused corundum (WFA, > 99% Al₂O₃),
- raw materials containing zirconium oxide (zirconia, AZS),
- magnesia,
- forsterite (olivine),
- doloma,
- silicon carbide,
- zirconium (zirconium silicate),
- quartz sand,
- spinel,
- graphite, coke, carbon black,
- chromium ore, chromium oxide,
particularly in amounts between 62.5 and 98.99, particularly between 87.5 and 97.0 wt.-%.

9. Refractory concrete mix according to one of the preceding claims, containing at least one fine-particle mineral additive, preferably selected from the following group, particularly preferably in the indicated amounts in wt.-%:
| | |
|---|---|
| - Binder clay | up to 15, particularly 1 - 10 |
| - alumina meal | up to 30, particularly 5 - 20 |
| - alumina cement (15 - 32% CaO) | up to 0,6, particularly 0,1 - 0,3 |
| - high alumina cement (32 - 39% CaO) | up to 0,5, particularly 0,1 - 0,25 |
| - Portland cement (60 - 72% CaO) | up to 0,25, particularly 0,1 - 0,15 |

10. Refractory concrete mix according to one or more of the preceding claims, containing at least one admixture, preferably selected from the following group, particularly preferably in the indicated amounts in wt.-%:
| | |
|---|---|
| - additives such as liquefiers, | up to 0,5, particularly 0,1 - 0,15 |
| binding regulators | |
| - aluminum hydroxide | up to 0,5 |
| - pore-forming agents | up to 0,5 |
| - stainless steel fibers | up to 3,0 |
| - synthetic fibers | up to 0,3, particularly 0,1 - 0,15 |

11. Use of a refractory concrete mix according to one or more of the preceding claims in facilities in the steel industry, in furnace units for pig iron production and iron treatment, and in pig iron transport units, and as a maintenance spray of worn areas of these facilities or units.

12. Use of a refractory concrete mix according to one or more of claims 1 to 10 in furnace units of the aluminum industry.

13. Use of a refractory concrete mix according to one or more of claims 1 to 10 in facility sectors of clinker production in the cement industry.

## Revendications

1. Mélange de béton réfractaire sec, sans ciment, contenant au minimum au moins un agrégat en matériau réfractaire et au moins un système liant « alcali-activé » composé d'au moins un liant minéral et un activateur minéral, qui forment dans un mélange avec de l'eau un géopolymère durcissant,
**caractérisé en ce que**
une combinaison composée d'au moins deux composants de magnésium réagissant en milieu alcalin avec de l'eau et formant un géopolymère avec le liant y est contenue comme activateur, dans lequel les composants de magnésium présentant une réactivité différente par rapport à l'humidité de l'air et par rapport au liant,
dans lequel le système liant présente comme liant au moins un silicate d'aluminium réactif avec la combinaison d'activateurs, finement divisé, du groupe consistant en métakaolin, argile tempérée, poussière de brique et/ou silicate d'aluminium alcalino-terreux du groupe consistant en cendres volantes de charbon, sable-laitier et/ou poussière de brique silico-calcaire et/ou silice amorphe,
dans lequel la combinaison d'activateurs est choisie parmi le groupe suivant de composants de magnésium : magnésie caustique calcinée, MgO calcinée sous forme de magnésie fondue et/ou frittée, spinelle contenant un excès de MgO, spinelle, brucite, silicates de magnésium tels que forstérite, olivine, dunite, serpentinite, additif contenant du MgO sous forme de phosphate de sodium contenant du MgO.

2. Mélange de béton réfractaire selon la revendication 1,
**caractérisé en ce que**
l'activateur contient au moins un produit à base de MgO sous forme de magnésie caustique calcinée, magnésie fondue et/ou frittée comme composants de magnésium.

3. Mélange de béton réfractaire selon la revendication 2,
**caractérisé en ce que**
l'activateur présente au moins un produit à base de MgO sous forme de magnésie caustique calcinée, magnésie fondue et/ou frittée comme composants de magnésium et au moins un composant de magnésium réagissant en milieu alcalin avec de l'eau, ne présentant pas de MgO ou qui se compose des deux composants de magnésium.

4. Mélange de béton réfractaire selon la revendication 2,
**caractérisé en ce que**
l'activateur présente uniquement un produit à base de MgO comme composant de magnésium ou se compose uniquement de produits à base de MgO.

5. Mélange de béton réfractaire selon l'une ou plusieurs des revendications 2 à 4,
**caractérisé en ce que**
l'activateur présente au moins deux magnésies caustiques calcinées comme composants de magnésium, en particulier se compose de deux magnésies caustiques calcinées.

6. Mélange de béton réfractaire selon l'une ou plusieurs des revendications précédentes,
**caractérisé en ce que**
le système liant contient de 40 à 99 % en poids, de préférence de 50 à 80 % en poids de liant.

7. Mélange de béton réfractaire selon l'une quelconque des revendications précédentes, contenant un liant et un activateur selon les quantités suivantes en % en poids :
1 - 15, en particulier 2 - 15 pour le liant
0,01 - 22,5, en particulier 1,0 - 7,5 pour l'activateur.

8. Mélange de béton réfractaire selon l'une quelconque des revendications précédentes,
contenant au moins un agrégat choisi parmi le groupe suivant :
- agrégats légers, par exemple vermiculite, perlite, argile expansée
- chamotte acide ou argileuse
- andalousite ou sillimanite
- mullite
- bauxite
- hexa-aluminate de calcium
- corindon fritté
- corindon fondu (BFA, Al₂O₃ de 94 - 97 %)
- corindon fondu (WFA, Al₂O₃ > 99 %)
- matières premières contenant de l'oxyde de zirconium (zircone, AZS)
- magnésie
- forstérite (olivine)
- dolomie
- carbure de silicium
- zirconium (silicate de zirconium)
- sable de quartz
- spinelle
- graphite, coke, noir de carbone
- minerai de chrome, oxyde de chrome,
en particulier en des quantités comprises entre 62,5 et 98,99, en particulier entre 87,5 et 97,0 % en poids.

9. Mélange de béton réfractaire selon l'une quelconque des revendications précédentes, contenant au moins un additif minéral finement divisé, de préférence choisi parmi le groupe suivant, de manière particulièrement préférée selon les quantités spécifiées en % en poids :
| | |
|---|---|
| - argile liant | jusqu'à 15, en particulier de 1 - 10 |
| - poussière d'alumine | jusqu'à 30, en particulier de 5 - 20 |
| - ciment d'alumine (CaO de 15 - 32 %) | jusqu'à 0,6, en part. de 0,1 - 0,3 |
| - ciment d'alumine fondu (CaO de 32 - 39 %) | jusqu'à 0,5, en part. de 0,1 - 0,25 |
| - ciment Portland (CaO de 60 - 72 %) | jusqu'à 0,25, en part. de 0,1 - 0,15 |

10. Mélange de béton réfractaire selon l'une ou plusieurs des revendications précédentes, contenant au moins un additif, de préférence choisi parmi le groupe suivant, de manière particulièrement préférée selon les quantités spécifiées en % en poids :
| | |
|---|---|
| - additifs, tels que fluidifiant, régulateur de prise | jusqu'à 0,5, en particulier de 0,1 - 0,15 |
| - hydroxyde d'aluminium | jusqu'à 0,5 |
| - agent porogène | jusqu'à 0,5 |
| - fibres en acier inoxydable | jusqu'à 3,0 |
| - fibres en matière plastique | jusqu'à 0,3, en particulier de 0,1 - 0,15 |

11. Utilisation d'un mélange de béton réfractaire selon l'une ou plusieurs des revendications précédentes dans des installations sidérurgiques, dans des systèmes de fours coulés pour la production de fonte brute et le traitement de fonte brute et dans des unités de transport de fonte brute, ainsi que comme pulvérisation pour l'entretien de zones usées dans lesdites installations ou lesdits fours.

12. Utilisation d'un mélange de béton réfractaire selon l'une ou plusieurs des revendications 1 à 10 dans des systèmes de fours coulés de l'industrie de l'aluminium.

13. Utilisation d'un mélange de béton réfractaire selon l'une ou plusieurs des revendications 1 à 10 dans des zones d'installations de la production de klinker de l'industrie du ciment.
